# EUROPEAN PATENT SPECIFICATION

(11) **EP 1 531 988 B1**
(45) Date of publication and mention of the grant of the patent: **24.01.2007**
(21) Application number: 03735338.0
(22) Date of filing: 04.07.2003
(51) Int. Cl.: B32B 27/34, B65D 65/40

(54) **A SHEET MATERIAL, A PACKAGE THEREOF AND USE THEREOF FOR PACKING**
BAHNMATERIAL, VERPACKUNG DARAUS UND VERWENDUNG DAVON ZUM VERPACKEN
MATERIAU EN FEUILLE, EMBALLAGE FORME DE CE DERNIER ET UTILISATION DE CE MATERIAU POUR L'EMBALLAGE

(30) Priority: 08.07.2002 DK 200201069
(43) Date of publication of application: 25.05.2005
(73) Proprietor: Amcor Flexibles Denmark A/S, DK-8700 Horsens (DK)
(72) Inventor: JENSEN, Steffen, Skov, DK-8722 Hedensted (DK); MALFAIT, Tony, B-8880 Ledegem (BE)
(74) Representative: Zeuthen-Aagaard, Henrik
(86) International application number: PCT/DK2003/000472
(87) International publication number: WO 2004/005021

(56) References cited:
- GB-A- 2 121 062
- US-A- 4 389 450
- US-A- 4 758 477
- US-A1- 2002 022 096
- US-B1- 6 416 832

## Description

### Technical Field

The present invention relates to the use of a sheet material having an exterior polyamide side and an opposite exterior polyolefin side comprising a laminate of a polyamide layer adhered to a polyolefin layer, a package comprising the sheet material and use of the sheet material in the manufacture of a packing. The sheet material is a two side bondable sheet material, which inter alia enables the sheet material not only to be sealed with the polyolefin layer against itself but also to be lap-sealed with the polyamide layer against the polyolefin layer.

### Background Art

Flexible laminated sheet materials are extensively used as packing materials. Such sheet materials are often provided as a laminated web to be folded, sealed and cut into the final single packages in a packing machine, wherein the goods to be packed is fed into the single packages being formed. Document GB-A-2121062 relates to pouches containing a flowable material. The pouch is made from a film in tubular form and has transversely heat-scaled ends. The film comprises a laminate of a base film and a sealant film. The base film is selected from nylon, polyethylene terephthalate, polyvinylidene etc. and the sealant film is made from a blend of an olefin copolymer and an ethylene-vinyl acetate copolymer.

In a well known example of a packing method using such flexible laminated sheet materials the web is stepwise introduced - typically from the top and downwards - into the packing machine where the two edges of the web are sealed together to form a flexible hose or tube. For each single package the tube is closed in the bottom end by a seal and the former single package is cut away below this seal. Then the goods to be packed is introduced into the closed tube, the tube/web is moved one step and the top end of the package is closed by a further seal. After cutting the final single package is completed.

Sheet materials of non-polar materials such as polyolefins are relatively easy to seal with other similar non-polar materials by a conventional heat sealing, also termed welding. However, polyolefins have a high permeability for gases and moisture and are therefore not efficient as barrier material in a package material, especially for sensitive goods such as food. To stop or essentially stop permeation of gases and moisture from the package to the surrounding atmosphere and/or the reverse, it is therefore necessary to include a non-permeable barrier layer in the sheet material. Effective barrier materials are typically polar polymers. In the sheet materials of the present invention use is made of polyamide (PA), which is a widespread barrier material of this type. The polyamide material cannot be sealed by conventional heat sealing to the non-polar polyolefins, and thus the sheet material has to be prepared by a lamination process using an adhesive, such as a two component adhesive. An alternative lamination method is extrusion lamination using a bonding polymer between the barrier layer and the polyolefin layer.

In case the sheet material is a laminate of a PA barrier layer and a polyolefin layer for use by the above packing method the polyolefin layer is used as a sealing layer ensuring the respective heat sealed seals. This is because the PA barrier materials generally have higher softening and melting temperatures than the polyolefins. Due to the differences between the materials of barrier and the sealing layer, the sealing layer can only be heat sealed against a similar material such as the same sealing layer and not against the barrier layer. For this reason the seal made to form the tube cannot be a lap-sealing which would require a sealing of the sealing layer against the barrier. Instead the sealing will be a so called fin-sealing wherein a seam will protrude as a fin outwards from the outer tube surface or into the interior of the tube, none of which solutions being satisfactory for the use and consumer appeal of the package. The top and bottom seals of the package does not involve this problem because the seam can be made with polyolefin against polyolefin on the inner side of the tube.

According to the known technique a lap-sealing can be obtained in the above packing method if the sheet material used is a three layer laminate of
sealing layer//barrier//sealing layer
having a sealing layer on both sides of the sheet. However, such three layer laminate is more expensive and complex than a two layer laminate. Furthermore such three layer laminates can give problems in practice in case of equal melting points of the two sealing layers inside and outside the laminate as the laminate will stick to the sealing equipment.

As the package costs for commercial reasons are desired to be on a low level whereas also the consumer appeal of the package is very important there is a demand for a cheap two layer laminate wherein the sealing layer is modified in such a way that it can also be sealed against the barrier material. With such a modified sheet material it would be possible to lap-seal the material in a conventional packing machine and obtain the more elegant useful package at a desirable low cost.

WO 97/47468 discloses a multilayer film comprising at least one polyamide layer and polyolefin layers attached to opposite sides of the polyamide layer. The polyolefin layers comprises a blend of at least one olefin containing polymer and an adhesive comprising at least one polyolefin having at least one functional moiety of an unsaturated carboxylic acid or anhydride thereof. As appears the multilayer film disclosed in WO 97/47468 is an example of the above discussed three layer laminates of sealing layer//barrier//sealing layer and will have the above discussed disadvantages.

US 5 707 750 discloses a co-extruded five layer film of the type polyamide/modified polyolefin/ethylene vinyl alcohol copolymer /modified polyolefin/polyamide. This film has polyamide at both exterior sides and hence not the sealing properties of polyolefins necessary for the packing method described above.

The present invention is based on the finding, that a conventional sealing layer based on polyolefins can be modified by incorporation of a material with adhesive properties in the outmost sealing sublayer to enable formation of a lap-seal bonding of sealing layer against barrier layer in conventional packing machines such at the one exemplified above.

Conventionally each layer in a laminated flexible sheet material for use as a packing material may be either an extruded monolayer or two or more coextruded sublayers. To avoid confusion the term "sublayer" will be used in the present specification and claims for such sublayers being coextruded with one or more further sublayers. Thus "sublayers" shall be distinguished from the term "layer" which in the present specification and claims will be used for the combined coextruded layer of two or more sublayers or for a monoextruded (not coextruded) single monolayer.

In the laminated flexible sheet materials two or more "layers" or "laminated layers" have been mutually laminated after the extrution process to form a "sheet" or "web" material to be used in the packing process.

By the lamination of two webs of different types of polymer sheets the webs are adhered together using a two component adhesive. The first web is moved from a first roll to an adhesive applicator wherein it is provided with a thin layer of a two component adhesive composition. If the two component adhesive composition contains a solvent or a mixture of solvents the solvents are then evaporated. This can be done by passing the web through a drying oven. Thereafter the second web from a second roll is moved together with the dried first web through the nip of a pair of pressure rollers.

In the present specification the interface between each sublayer in a layer can also be denoted as "/" between said sublayers, whereas the interface between layers in a laminate can be denoted as "//".

Coextrusion of a number of polymers of the same type can be carried out without any adhesive between the sublayers. However it is also well known to coextrude polymers of different types, and in that case a special sublayer of a so called tie resin (TR) is co-extruded between the sublayers of the polymers of different types. An example of such coextruded layer can be
PE/TR/PA/TR/PE
wherein PE = polyethylene, PA = polyamide and TR = tie resin.

Examples of conventional tie resins appear in US 4 762 882 (Okano et al.) disclosing a modified polyolefin resin made of a copolymer of ethylene and α-olefin grafted with 0.01 to 3 % by weight of an unsaturated carboxylic acid or a derivative thereof. The modified resin has excellent adhesive and heat-sealing properties when welded polyolefin layer to polyolefin layer. However such tie resins have only been used as melt adhesives where two coextruded layers have to be adhered together in a melted state during the coextrusion. They have not previously been used in a lap-sealing process, which generally is carried out at a lower temperature and whereby only the adhesive melts.

### Disclosure of Invention

The present invention relates in a first aspect to a sheet material having an exterior polyamide side and an opposite exterior polyolefin side comprising a laminate of a polyamide layer adhered to a polyolefin layer, which polyolefin layer is an exterior monolayer or coextrudate of two or more sublayers, wherein the monolayer or the exterior outmost sublayer is a binding layer comprising a functionalized polyolefin selected from the group consisting of olefin/vinylacetate copolymers, olefin/alkylacrylate copolymers, olefin/neutralized and olefin/partially neutralized carboxylic acid copolymers, carboxylic acid or anhydride grafted polyolefins, carboxylic acid or anhydride grafted olefin/vinylacetate copolymers, and carboxylic acid or anhydride grafted olefin/alkylacrylate copolymers; and optionally unmodified polyolefin and conventional additives, wherein the polyolefin layer of said sheet material is sealable to the polyamide layer of said sheet material and/or vice versa.

In a second aspect the present invention relates to a package comprising such a sheet material.

In a third aspect the present invention relates to the use of the inventive sheet material in the manufacture of a package.

Finally in a fourth aspect the present invention relates to the use of a functionalized polyolefin selected from the group consisting of olefin/vinylacetate copolymers, olefin/alkylacrylate copolymers, olefin/neutralized and olefin/partially neutralized carboxylic acid copolymers, carboxylic acid or anhydride grafted polyolefins, carboxylic acid or anhydride grafted olefin/vinylacetate copolymers, and carboxylic acid or anhydride grafted olefin/alkylacrylate copolymers optionally in mixture with unmodified polyolefin and conventional additives, as an outmost layer or sublayer on the polyolefin side of a sheet material having an exterior PA side and an opposite exterior polyolefin side.

The inventive sheet material is typically designed as a conventional two layer sheet of polyamide laminated with polyolefin which can be heat sealed with polyolefin against polyolefin using a sealing temperature where the polyolefin partially or completely melts whereas the polyamide does not. Such heat sealing may be a strong non-peelable fusion seal or an easy to open peelable seal. Alternatively other kinds of sealing techniques, such as impulse or high frequency sealing may be employed.

However, the inventive sheet material differs from the conventional sheet materials by the composition of the outmost sublayer on the polyolefin side which is a special binding layer. In the present specification this binding layer will also be termed the "lapseal binding layer".

Apart from a minor optional amount of conventional additives such as antiblocking agent and slip agent the lapseal binder is a functionalized polyolefin or a combination of a conventional, preferably unmodified polyolefin, and a functionalized polyolefin.

It was found that the lapseal binding layer of the inventive sheet can be sealed against the polar polyamide layer using sealing conditions where the lapseal binding layer, but not the polyamide is melted, and that the sealbility of lapseal binding layer to lapseal binding layer is equal to that of conventional polyolefin to polyolefin. In per se known manner the polyolefins may be selected so as to give a fusion seal or a peelable seal.

Accordingly a web of the inventive sheet material can easily be lapsealed into a tube and the tube can be sealed and cut to packages in a conventional packing machine of the type referred to in the preamble.

According to the prior art packing on this packing machine required a three layer laminate polyolefin//PA//polyolefin which is more expensive and may give rise to problems of the laminate sticking to the sealing equipment.

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

### Detailed description of the invention

The inventive sheet material is designed as a laminate including a PA layer and a polyolefin layer. The two layers can be laminated together by any conventional lamination method.

The lamination may typically be carried out as previously described using a two component adhesive comprising a polyol component and an isocyanate component mixed in a certain ratio. Both the polyol component and the isocyanate component are based on molecules having two or three functional groups leading to a strong cross-linking in the chemical reaction to follow. The two component adhesive compositions can be either solvent based (aqueous or non-aqueous solvent) or solvent free.

The solvent based two component adhesives are prepolymerized in a high degree and the solvent, such as ethylacetate, is added to lower the viscosity to a level necessary for the application. After application the solvent is evaporated completely from the additive system.

The solvent free two component adhesives do not contain any volatile solvent. The degree of prepolymerization is smaller than the case is for the solvent based adhesives. Accordingly the viscosity is substantially lower and the adhesives can be applied without viscosity lowering solvents. In some cases it may be necessary to apply the solvent free adhesives at elevated temperature, typically up to 70°C.

Both solvent based and solvent free two component adhesive systems usable for lamination of PA and polyolefins are available on the market. Examples of solvent based systems are LIOFOL^{™} UR3855 + LIOFOL^{™} UR6056 from Henkel and ADCOTE^{™} 575S + Catalyst CT from Rohm & Haas and examples of solvent free systemt are LIO-FOL^{™} UR7745 + LIOFOL^{™} UR6075 and LIOFOL^{™} UR7740 + LIOFOL^{™} UR6065 from Henkel and MORFREE^{™} 412A + MORFREE^{™} C88 from Rohm & Haas.

The PA layer can be of any PA conventionally used in sheet materials for packing, such as PA 6, PA 6.6, PA 6.12, PA 66.6 and blends thereof, and may also include cast polyamide (cPA), orientated polyamide (OPA) and conventional PA coextrudates, and typically have a density of 1.05 - 1.27 g/cm³, and a melting point of 190 - 240°C. The type and thickness of the PA layer is selected so as to obtain sufficient barrier effect. Non limiting examples of the thickness is 1- 100 µm preferably 12 - 30 µm.

The polyolefin layer may in one embodiment be a monolayer which in that case will be the lapseal binding layer. However, in the more preferred embodiments the polyolefin layer is a coextruded layer of two or more sublayers termed the 1st, 2nd ...and the n'th sublayer where the 1st sublayer is adjacent to the PA layer and the n'th sublayer is the lapseal binding layer. The number of the coextruded sublayers is theoretically not limited but in practice the number is 2 to 11, preferably 2 - 7.

For practical reasons any polyolefin sublayer which is not the lapseal binding layer and which has an inside position in the laminate may also be termed an inside sublayer.

The inside sublayers of polyolefin can be of any polyolefin conventionally used in flexible sheet materials for packing including polyethylene, polypropylene and higher polyolefins in the form of homopolymers or copolymers as well as mixtures thereof.

Examples of usable polyolefins for the inside sublayers are low density polyethylene (LDPE), linear low density polyethylene (LLDPE), high density polyethylene (HDPE), polypropylene (PP), and poly-C₄-C₁₀-alkylenes as well as mixtures and copolymers thereof.

Examples of usable LDPE are HIMOD^{™} FT5270 from Borealis A/S, ExxonMobil® LD 151 and 156 series from Exxon Mobil Corporation, and products from the STA-MYLAN^{™} series from DSM Polyethylenes.

Examples of usable LLDPE are the DOWLEX^{™} 5056 series from Dow Chemical Company and products from the EXCEED^{™} series from Exxon Mobil Corporation.

Examples of copolymers are the high density polyethylene (HDPE) hexene copolymer mPact^{™} D449 from Chevron Phillips Chemical Company LP, the ethylene octene copolymers EXACT^{®}0201 and EXACT^{®}0203 from DEX-PLASTOMERS V.O.F., and the ethylene vinylacetate copolymers ExxonMobil® EVA 362 and 368 series from Exxon Mobil Corporation. Such copolymers are preferably used in mixtures with polyethylene or polypropylene.

The inside sublayers are preferably selected so as to ensure mechanical and rheological properties being close to those of the lapseal binding layer and to ensure an attractive body and appearance of the inventive sheet material.

The lapseal binding layer comprises a functionalized polyolefin which in some cases may be used alone in case the functionality is low. Optionally the functionality can be externally modified by a corona surface treatment of the lapseal binding layer. In most cases the lapseal binding layer is a composition of a conventional polyolefin of the type mentioned above in connection with the inside sublayers and a functionalized polyolefin. Furthermore this "lapseal composition" optionally contains conventional additives such as antiblocking agent and slip agent.

The functionalized polyolefin can be obtained by copolymerisation of the olefins with monomers having functional groups giving a high affinity to PA or by incorporation of functional groups with affinity to PA by carboxylic acid or anhydride grafting or by a combination of both methods. For the grafting process the carboxylic acid or anhydride should preferably be unsaturated. More preferred are dicarboxylic acids or anhydrides.

A group of usable functionalized polyolefins are polyolefin copolymers, preferably ethylene copolymers with at least one monomer selected from the group consisting of vinylacetate, alkylacrylates, alkylmethacrylates, acrylic acid, methacrylic acid and ionomers, preferably vinylacetate and alkylacrylates. Preferred ethylene copolymers are ethylene vinylacetate (EVA), ethylene methylacrylate (EMA), ethylene ethylacrylate (EEA), ethylene butylacrylate (EBA), ethylene acrylic acid (EAA) and blends thereof. The preferred ethylene copolymers are derived from the copolymerization of at least one ethylene monomer and at least one vinylacetate, alkylacrylate or alkylacrylic acid monomer.

For use in a peelable lapseal binding layer in mixture with a polyolefin the ethylene copolymer is preferably derived from less than 30 % by weight of the vinylacetate, alkylacrylate or alkylacrylic acid monomer, preferably 2 to 25 % by weight. The vinylacetate, alkylacrylate or alkylacrylic acid monomers used to form the functionalized polyolefm decreases the melting temperature of the mixture allowing the lapseal binding layer to be sealed at lower temperatures. On the other hand these monomers increase the polarity of the functionalized polyolefin allowing to facilitate the adhesion to polar substrates, such as PA.

The ethylene copolymer as the functionalized polyolefin and the polyolefin are only partially compatible which supports the peelability.

The amount of the ethylene copolymer in the mixture depends on the functionality and can be estimated by a skilled person so as to ensure a peelable seal which is sufficiently strong to provide adhesion to the sealing substrate but sufficiently low in order to provide easy opening. Preferred amounts of the ethylene copolymer are found in the range from 1 to 20 % by weight.

An ideal seal of this type must have a strength which, on the one hand, must be sufficient to keep the package intact until it is opened by the consumer, but which, on the other hand, must be sufficiently weak to enable the package to be opened by hand without the use of any auxiliary instrument. Furthermore, it must be possible to effect this manual opening without producing a tear or any other deformation in the material of the films used for making the seal. The peel strength has to be consistent over a broad heat seal temperature window. In addition to that the cohesive failure mechanism during opening has to occur without zipping, fibre tear or angle hairs. In other words the peel trace should be smooth and exempt from all kinds of visual disruptions.

In a mixture the polyolefin interrupts the sealability of the functionalized polyolefin to the sealing substrate. Preferred polyolefins that are partially compatible with the functionalized polyolefin are poly-1-butene homopolymers or copolymers derived from the copolymerization of 1-butene and at least one C₂-monomer and/or an ethylene-α-olefin with 3 or 5 - 10 carbon atoms in the α-olefin.

The peelable lapseal binding layer should preferably have a surface tension of at least 36 mN per meter. Such surface tension can optionally be obtained by subjecting the layer to a corona discharge pretreatment with a sufficient intensity. Such corona treatment is well known in the art.

The olefin/neutralized or olefin/partly neutralized carboxylic acid copolymers which are also useful as functionalized polyolefins in the lapseal binding layer of the sheet material of the present invention are available on the market. Examples of useful types of such copolymers may be produced by copolymerizing alkenes, such as ethylene with eg. methacrylic acid and subsequently neutralizing or partly neutralizing the copolymer with eg. NaOH. Examples of useful olefin/neutralized or olefin/partly neutralized carboxylic acid copolymers which are commercially available are the DuPont products Surlyn® 1705-1 and Surlyn® 1857.

A further example of usable functionalized polyolefins are found among conventional tie resins known in the art and being compatible with polyolefins and adhering to polyamide. Typically such tie resins are polyolefins modified with an unsaturated carboxylic acid or anhydride. Examples are the adhesive maleic anhydride modified LLDPE resins of the Bynel® 4100 series from DuPont including Bynel® CXA 4157; and the linear low density polyethylene (LLDPE) with incorporated functional groups YPAREX^{™} OH-029 from DSM Polyethylenes.

Further usable functionalized polyolefins among the Bynel® adhesive resins from DuPont are those having a high affinity for PA and PE from the series 2100 (anhydride-modified ethylene acrylate); 3000 and 3900 (anhydride-modified EVA); 4000 (anhydride-modified HDPE); 4100 (anhydride-modified LLDPE); and 4200 (anhydride-modified LDPE). Furthermore series 5000 (anhydride-modified PP) having high affinity for PA and PP. Other functionalized polyolefins, such as Tymor 1203 and Tymor 1204, manufactured by Nichimen Europe plc, 240155 40090 Düsseldorf, are also useful.

Depending on the functionality of the functionalized polyolefin it can be used alone, but in most cases it is used together with a conventional unmodified polyolefin in the lapseal binder layer. Accordingly the amount of the functionalized polyolefin in the lapseal layer - apart from conventional additives - may range from 0.5 to 100 % by weight. In case the functionalized polyolefin is a conventional tie resin the amount of functionalized polyolefin is typically 20 - 80 % by weight, preferably 35 - 65 % by weight. On the other hand ethylene copolymers with vinylacetate (EVA) and alkylacrylates can be prepared with a higher functionality in which case they typically are used in amounts of 1 to 20 % by weight, preferably 5 to 15 % by weight.

As stated above the functionalized polyolefins can also be obtained by a combination of copolymerization with functional groups such as vinylacetate and alkylacrylates, and a subsequent grafting with carboxylic acid or anhydride or simply by using commercially available ionomers, such as olefin/neutralized and olefin/partially neutralized carboxylic acid copolymers. Accordingly the person skilled in the art is able to tailoring the desired degree of functionality as well as the amount of the functionalized polyolefin in the mixture with a polyolefin in order to obtain the desired sealing properties to substrates of polyolefin and PA, respectively.

The lapseal binding layer contains optionally, but preferred, some conventional additives, such as an antiblocking agent and a slip agent, typically in an amount of up to 10 % by weight of the total lapseal binding layer.

In the manufacture of the inventive sheet material the surface of the lapseal layer may optionally be corona treated to modify the surface tension.

The inventive sheet material is typically a flexible sheet material but also less flexible and non flexible materials are possible.

For use as a packing material with the sealing properties in question the two outmost layers should be a PA layer and the lapseal binding layer respectively. However further laminated layers and/or coextruded sublayers may be included in a manner known per se at any interface between the polyamide layer and the polyolefin layer, between two of the sublayers of the polyolefin layer or between sublayers in a coextruded PA layer. Examples of such further layers or sublayers are metal layers such as Al-layers and layers of printing ink.

### Brief Description of the Drawing

Preferred embodiments of a bag according to the invention prepared from the sheet material according to the invention are described in detail in the following with reference to the accompanying drawings, in which
Fig. 1 is a diagrammatic front view of a bag according to the invention, and
Fig. 2 is a diagrammatic sectional view along the line II-II in Fig. 1. Fig. 2 depicts two embodiments of a bag according to the present invention. In one embodiment (top portion in solid line) the upper edge 5 is essentially abutting the folding line 23. In another embodiment (top portion in broken line) the upper edge 5 is clearly separated from the folding line 23'.

### Best Modes for Carrying out the Invention

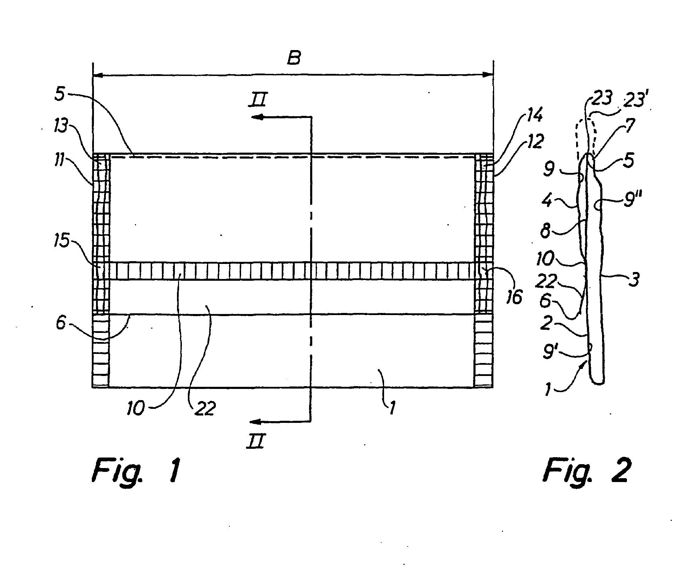

The inventive sheet material may in a preferred embodiment be used for the preparation of a special package in the form of a bag having a peelable seal which is easy to open. This bag is shown in Figs. 1 and 2.

This embodiment of the bag according to the invention shown in Figs. 1 and 2 has the form of a pouch with a pouch portion 1 formed by a front wall 2 and a back wall 3 and a flap 4 extending in an overlapping manner down onto the front wall 2. The pouch is formed by folding a first end of the sheet material and hereby placing a first edge 5 of the sheet material adjacent to one side of the sheet material and subsequently folding an opposite end of the sheet material with a second edge 6 into an overlapping position in relation to the first end. The first edge thus defines a part of the opening 7 of the pouch portion 1.

Between the outer face 8 of the front wall 2 and the inner face 9 of the flap a longitudinal seal 10 is provided extending in a though-going manner between two side edges 11, 12 of the bag. At each side a side edge seal 13,14 is provided between the inner face 9' of the front wall 2 and the inner face 9" of the back wall 3. Correspondingly, in the area of each side edge 11,12 seals 15,16 are provided between the inner face 9 of the flap 4 and the outer face 8 of the front wall 2 and - if applicable, in the area of each side edge 11,12 seals 13,14 are optionally also provided between the inner face 9 of the flap 4 and the inner face 9" of the back wall 3.

In one embodiment of the bag according to the invention the front wall 2 and the back wall 3 are essentially of the same height, making a folding line 23 for folding the flap 4 essentially abutting the upper first edge 5 of the front wall 2. In such an embodiment the seals 13,14 between the front wall 2 and the back wall 3 adjacent to the side edges 11,12 respectively are preferably non-peelable fusion seals.

In another embodiment of the bag according to the invention the front wall 2 and the back wall 3 are of different heights, making the folding line 23' clearly separated from the upper edge 5 of the front wall 2. Such an embodiment has the advantage that when the peelable seals 10, 15, 16 are broken and the flap 4 is unfolded in order to open the bag the product(s) contained in the bag is/are much more easily accessible for the consumer or the end user. In this embodiment the seals 13,14 adjacent to the side edges 11,12 respectively between those parts of the side edge portions 11,12 of the front wall 2 and the back wall 3, said seals being provided by welding inner face 9' to inner face 9" as well as the seals 13,14 adjacent to the side edges 11,12 of the flap 4 and the back wall 3, said seals provided by welding inner face 9 to inner face 9", are peelable seals.

The distance between the folding line 23' and the upper free edge 5 of the front wall 2 in this embodiment of the inventive bag may be of any practical and feasible size.

Preferably the folding line 23' is separated from the upper free edge 5 of the front wall 2 by a distance of 2 - 50 %, preferably 5 - 40 %, most preferred 10 - 30 % of the dimension of the side edges 11,12 of the closed bag.

It may be advantageous to include closing means which enables repeatedly opening and closing of the bag. Such closing means may be of any suitably nature, such as a hotmelt or an adhesive tape (optionally provided with a release liner) located between the flap 4 and the area of the front wall 2 to be covered by the flap 4. Preferably such closing means extends longitudinal in a through-going manner between the two side edges 11, 12 of the bag.

The bag can be prepared from the flexible sheet according to the invention. The sheet comprises as a first outer layer, the lapseal binding layer forming the inner faces 9, 9',9"of the bag. The sheet material further comprises as a second outer layer a PA layer forming the outer faces 8 of the bag.

The peelable seals 15,16,10 preferably have a peel strength of 1 - 5 N/15 mm, more preferred 2 - 4 N/15 mm, and most preferred between 2.5 and 3.5 N/15 mm.

The bag of the type shown in Figs. 1 and 2 was previously prepared from a three layer sheet comprising an inner layer of polyethylene (PE), an outer layer of a copolymer of polyethylene (PE) and polypropylene (PP) and a subjacent intermediate layer of polypropylene (PP) as disclosed in EP 0 696 991. This sheet material however does not comprise a barrier layer.

Use of the inventive sheet material having a PA layer as the outer layer reduces or eliminate the problems caused when the material sticks to the sealing equipment. In case a barrier layer such as a PA layer should be included in the known sheet material it would be more expensive than the inventive sheet material.

The invention is further illustrated by the following examples. In the examples and in the other part of the specification and in the claims percentages are by weight unless otherwise stated.

### Example 1

A polyethylene web of coextruded sublayers was prepared using following sublayers:

| | |
|---|---|
| Sublayer 1 | 15 µm HIMOD^{™} FT5270* |
| Sublayer 2 | 15 µm HIMOD^{™} FT5270* |
| Sublayer 3 | 30 µm 50 % YPAREX^{™} OH-029**, 48 % EXACT^{®}0201***, 2% POLYBATCH FSU105E****. |

| | |
|---|---|
| * HIMOD^{™} FT5270 is available from Borealis A/S, Kongens Lyngby, Denmark and is a low density polyethylene (LDPE) with a density of 927 kg/m³ (ISO 1183), a melt flow rate (MFR) (190°C/2.16 kg) of 0.75 g/10 min (ISO 1133), a melting temperature of 115 °C (ISO 11357/03) and a Vicat softening temperature of 101 °C (ISO 306). **YPAREX^{™} OH-029 is available from DSM Polyethylenes, Geleen, The Netherlands and is a linear low density polyethylene (LLDPE) with incorporated anhydride functional groups and with a density of 918 kg/m³ (ISO 1183 (A)), a melt flow index of 2.4 dg/min (ISO 1133 (A/4)) and a melting point of 125 °C. ***EXACT®0201 is available from DEX-PLASTOMERS V.O.F, Heerlen, The Netherlands and is an ethylene octene copolymer with a density of 902 kg/m³ (ISO 1183), a melt flow rate (MFR) (190°C/2.16 kg) of 1.1 dg/min (ISO 1133), a DSC peak melting point of 95 °C (ASTM D 3418) and a Vicat softening temperature (at 10 N) of 87 °C (ISO 306). **** POLYBATCH FSU105E available from A. Schulman Plastics N.V., Bomem, Belgium, contains 5 % erucamide as slip agent and 10 % silica as antiblocking agent in a PE basis. | |

All the above data have been provided by the manufacturers.

This polyethylene web was laminated using a conventional two component adhesive (LIOFOL^{™} UR7740 + LIOFOL^{™} UR6065 from Henkel) to a web of orientated polyamide (OPA) having a thickness of 15 µm with sublayer 1 adjacent to the OPA web.

### Example 2

A polyethylene web of coextruded sublayers was prepared using following sublayers:

| | |
|---|---|
| Sublayer 1 | 15 µm HIMOD^{™} FT5270* |
| Sublayer 2 | 15 µm HIMOD^{™} FT5270* |
| Sublayer 3 | 30 µm 75 % YPAREX^{™} OH-029**, 23 % EXACT®0201***, 2% POLYBATCH FSU105E. |

This polyethylene web was laminated using a conventional adhesive (LIOFOL^{™} UR7740 + LIOFOL^{™} UR6065 from Henkel) to a web of orientated polyamide (OPA) having a thickness of 15 µm with sublayer 1 adjacent to the OPA web.

### Test results

The laminates prepared in examples 1 and 2 were tested for lap-seal strength. Two pieces of the laminate both having the modified polyolefin binding layer downward were placed the one over the other and sealed using a counter body of rubber (temperature about 90 °C) against the downward binding layer of the downward sheet and a heated sealing tool of steel against the upmost PA layer. The sealing was carried out in 0,5 seconds at a pressure of 0,4 N/mm² using a "Labor-Siegelgerät" SGPE 20 from W. Kopp Verpackungsmashinen, Esslingen-Warldenbromm, Germany. This sealing simulates a lap-seal with a OPA-layer being sealed to a modyfied polyolefin binding layer.

The T-shaped peeling strength of the sealed seam was measured for seams made in the machine direction (MD) of the laminate web and seams in the transverse direction (TD) with the temperature of the steel sealing tool ("sealing temp.") as stated in table 1 showing the results. The peeling strength test was carried out according to Applicant's method SCAN STM 04, method B, which is a modification of DIN 53 357. The results are mean values from 3 or 4 samples.

**Table 1**

| T peeling strength in N/15 mm | | | | | | | | |
|---|---|---|---|---|---|---|---|---|
| Sealing temp. °C | Example 1 | | | | Example 2 | | | |
| | MD | | TD | | MD | | TD | |
| | max. | av. | max. | av. | max. | av. | max. | av. |
| 120 | 0.5 | 0.4 | 0.4 | 0.3 | 0.3 | 0.2 | 0.4 | 0.3 |
| 130 | 1.6 | 1.2 | 1.6 | 1.2 | 2.6 | 1.9 | 1.4 | 1.1 |
| 140 | 2.1 | 1.9 | 2.3 | 1.9 | 3.1 | 2.1 | 1.8 | 1.5 |
| 150 | 3.0 | 2.7 | 2.7 | 2.5 | 2.7 | 1.9 | 2.0 | 1.5 |
| 160 | 3.8 | 3.6 | 3.3 | 2.8 | 3.1 | 1.8 | 2.3 | 1.9 |
| 170 | 3.9 | 3.7 | 4.4 | 3.7 | 2.8 | 1.7 | 2.2 | 1.9 |
| 180 | 5.8 | 5.5 | 5.3 | 5.1 | 4.4 | 1.7 | 2.4 | 1.9 |
| 190 | 7.4 | 6.7 | 6.6 | 6.2 | 7.1 | 2.7 | 3.3 | 2.4 |
| 200 | 7.1 | 6.4 | 6.3 | 5.8 | 8.0 | 3.4 | 3.8 | 2.1 |

| | | | | | | | | |
|---|---|---|---|---|---|---|---|---|
| MD: Machine direction TD: Transverse direction max.: Maximal peel strength av.: Average peel strength at 20 to 90 % of the tension. | | | | | | | | |

The test results show a peel strength within the desired range over a broard range of sealing temperatures.

### Example 3

A polyethylene web of coextruded sublayers was prepared using following sublayers:

| | | |
|---|---|---|
| Sublayer 1 | 25 µm | 52 % ExxonMobil® LD 156BW* |
| | | 40 % ExxonMobil® LD 156HE* |
| | | 8 % Recycled PE |
| Sublayer 2 | 15 µm | 80 % mPact^{™} D449** |
| | | 20 % ExxonMobil® LD 151 BW*** |
| Sublayer 3 | 10 µm | 60 % Bynel® CXA4157**** |
| | | 34,5 % EXACT®0203***** |
| | | 3,5 % POLYBATCH FSU 105E |
| | | 2 % ExxonMobil® LD 551 AB****** |

| | | |
|---|---|---|
| * ExxonMobil® LD 156 BW and LD 156 HE are available from Exxon Mobil Corporation and are low density polyethylene (LDPE) with a density of 926 kg/m³ (ASTM D 2839/1505), a melt index of 0.75 g/10 min (ASTM D 1238) and a melting point of 113 °C (ASTM D 3418). LD 156 HE contains 1500 ppm antiblocking agent and 550 ppm slip agent (erucamide). **mPact^{™} D449 is available from Chevron Phillips Chemical Company LP, Houston, Texas, USA, a high density polyethylene (HDPE) hexene copolymer with a density of 942 kg/m³ (ASTM D 1505), a melt index of 0,8 g/10 min (ASTM D 1238E) and a melting temperature of 130°C. *** ExxonMobil® LD 151 BW is available from Exxon Mobil Corporation and is a low density polyethylene (LDPE) with a density of 933 kg/m³ (ASTM D 2839/1505), a melt index of 3 g/10 min (ASTM D 1238) and a melting point of 116 °C (ASTM D 3418). ****Bynel® CXA 4157 from DuPont is an adhesive maleic anhydride modified LLDPE resin. Melt index 3.0 dg/min, density 0.92 g/cm³, melt point 127°C and Vicat softening point 93°C. *****EXACT®0203 is available from DEX-PLASTOMERS V.O.F, Heerlen, The Netherlands and is an ethylene octene copolymer with a density of 902 kg/m³ (ISO 1183), a melt index (190°C/2.16 kg) of 3.0 dg/min (ISO 1133), a DSC peak melting point of 95 °C (ASTM D 3418) and a Vicat softening temperature (at 10N) of 80 °C (ISO 306). ******ExxonMobil® LD 551 is available from Exxon Mobil Corporation and is an antiblock masterbatch containing 50 % by weight antiblock agent in a polymer carrier of a blend of a LDPE homopolymer and a EVA copolymer. | | |

This polyethylene web was laminated using a conventional adhesive (LIOFOL^{™} UR7740 + LIOFOL^{™} UR6065 from Henkel) to a web of orientated polyamide (OPA) having a thickness of 15 µm with sublayer 1 adjacent to the OPA web.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

1. Use of a sheet material having an exterior polyamide side and an opposite exterior polyolefin side comprising a laminate of a polyamide layer adhered to a polyolefin layer, which polyolefin layer is an exterior monolayer or coextrudate of two or more sublayers, wherein the monolayer or the exterior outmost sublayer is a binding layer comprising a functionalized polyolefin selected from the group consisting of ole-fin/vinylacetate copolymers, olefin/alkylacrylate copolymers, olefin/neutralized and ole-fin/partially neutralized carboxylic acid copolymers, carboxylic acid or anhydride grafted polyolefins, carboxylic acid or anhydride grafted olefin/vinylacetate copolymers, and carboxylic acid or anhydride grafted olefin/alkylacrylate copolymers, and optionally unmodified polyolefin and conventional additives, for the preparation of a sealed article wherein the polyolefin layer at the exterior side of said sheet material is sealed to the polyamide layer at the exterior side of said sheet material and/or vice versa.

2. Use of a sheet material as claimed in claim 1, wherein unmodified polyolefin is present in the binding layer, and is a copolymer of ethylene and an olefin of 4 to 10 carbon atoms.

3. Use of a sheet material as claimed in claims 1 or 2, wherein the polyolefin layer is a coextrudate of two or more sublayers, and one or more of the inside sublayers is a mixture of 50 - 90 % by weight of a copolymer of EDPE and an olefin of 4 to 10 carbon atoms and 10 - 50 % by weight of LDPE.

4. Use of a sheet material as claimed in any one of the preceding claims, wherein the polyamide layer of said sheet material is sealed to the polyolefin layer of said sheet material and/or vice versa in a peelable fashion.

5. Use of a sheet material as claimed in any one of the preceding claims, wherein the polyolefin layer of said sheet material is sealed to the polyolefin layer of the said sheet material in a fusion-seal fashion.

6. Use of a sheet material as claimed in claims 1 - 4, wherein the polyolefin layer of said sheet material is sealed to the polyolefin layer of the said sheet material in a peelable fashion.

7. Use as claimed in any one of the preceding claims wherein the sheet material further comprises one or more further laminated layers and/or coextruded sublayers at any interface between the polyamide layer and the polyolefin layer, between two sublayers of the polyolefin layer and/or two sublayers in a PA coextrudate.

8. Use of a sheet material as claimed in any one of the preceding claims, wherein the binding layer has a modified surface, which has been imparted by treating the surface of the binding layer with a corona discharge.

9. A package comprising a sheet material having an exterior polyamide side and an opposite exterior polyolefin side comprising a laminate of a polyamide layer adhered to a polyolefin layer, which polyolefin layer is an exterior monolayer or coextrudate of two or more sublayers, wherein the monolayer or the exterior outmost sublayer is a binding layer comprising a functionalized polyolefin selected from the group consisting of ole-fin/vinylacetate copolymers, olefin/alkylacrylate copolymers, olefin/neutralized and ole-fin/partially neutralized carboxylic acid copolymers, carboxylic acid or anhydride grafted polyolefins, carboxylic acid or anhydride grafted olefin/vinylacetate copolymers, and carboxylic acid or anhydride grafted olefin/alkylacrylate copolymers, and optionally unmodified polyolefin and conventional additives, wherein the polyolefin layer at the exterior side of said sheet material is sealed to the polyamide layer at the exterior side of said sheet material and/or vice versa.

10. A package as claimed in claim 9, wherein the package is a bag.

11. A bag as claimed in claim 10 comprising a folded sheet of the material having an inner face (9', 9") and an outer face (8) and comprising a pouch portion (1) having a front wall (2) and a back wall (3) and a flap (4) extending from the back wall (3) and folded down-onto the front wall about a folding line (23 or 23'), the inner face (9') of the front wall (2) being sealed to the inner face (9") of the back wall (3) at portions of side edges (11,12) of the bag by means of side edge seals (13,14), and the inner face (9) of the flap (4) being sealed to the outer face (8) of the front wall (2) by means of a longitudinal welding seam (10) and by means of sealing seams (15,16) at portions of side edges (11,12) for obtaining a closed bag enclosing a packed product, said folded sheet material providing peelable seals (10, 15, 16), when welded inner face (9) to outer face (8), and seals (13, 14) between those parts of the side edge portions (11,12) of the front wall (2) and the back wall (3) being welded inner face (9') to inner face (9") and - if applicable, optionally seals (13,14) between those parts of the side edge portions (11,12) of the flap (4) and the back wall (3) being welded inner face (9) to inner face (9"), wherein - when seen relative to the bag - the inner layer of the bag comprises the binding layer, and the outer layer of the bag comprises the polyamide layer.

12. A bag as claimed in claim 11, wherein the folding line (23) is essentially abutting the upper free edge (5) of the front wall (2).

13. A bag as claimed in claim 12, wherein the seals (13, 14) between portions of the side edges (11,12) of the front wall (2) and the back wall (3) being welded inner face (9') to inner face (9") are non-peelable fusion seals.

14. A bag as claimed in claim 12, wherein the seals (13, 14) between portions of the side edges (11,12) of the front wall (2) and the back wall (3) being welded inner face (9') to inner face (9'') are peelable seals.

15. A bag as claimed in claim 11, wherein the folding line (23') is clearly separated from the upper free edge (5) of the front wall (2).

16. A bag as claimed in claim 15, wherein the folding line (23') is separated from the upper free edge (5) of the front wall (2) by a distance of 2 - 50 %, preferably 5 - 40 %, most preferred 10 - 30 % of the dimension of the side edges (11,12) of the closed bag.

17. A bag as claimed in claim 15 or 16, wherein the seals (13, 14) at the side ledges (11,12) of the front wall (2) and the back wall (3), said seals provided by welding inner face (9') to inner face (9"), and wherein the seals (13,14) at the side edges (11,12) of the flap (4) and the back wall (3), said seals provided by welding inner face (9) to inner face (9"), are peelable seals.

18. A bag as claimed the claims 11 - 17, wherein the bag is provided with closing means for enabling repeatedly opening and closing of the bag.

19. A bag as claimed in claim 18, wherein said closing means comprises a hotmelt or an adhesive tape.

20. A bag as claimed in claim 19, wherein said closing means comprises an adhesive tape provided with a release liner.

21. Use as claimed in claims 1 to 8 of the sheet material in the manufacture of a package.

22. Use of a functionalized polyolefin selected from the group consisting of olefin/vinylacetate copolymers, olefin/alkylacrylate copolymers, olefin/neutralized and olefin/partially neutralized carboxylic acid copolymers, carboxylic acid or anhydride grafted polyolefins, carboxylic acid or anhydride grafted olefin/vinylacetate copolymers, and carboxylic acid or anhydride grafted olefin/alkylacrylate copolymers optionally in mixture with unmodified polyolefin and conventional additives, as an outmost layer or sublayer on the polyolefin side of a sheet material having an exterior PA side and an opposite exterior polyolefin side by which use the polyolefin layer at the exterior side of said sheet material is sealed to the polyamide layer at the exterior side of said sheet material and/or vice versa.

## Patentansprüche

1. Verwendung eines bahnförmigen Materials mit einer Polyamidaußenseite und einer gegenüberliegenden Polyolefinaußenseite, umfassend ein Laminat einer Polyamidschicht, die an eine Polyolefinschicht anhaftet, wobei die Polyolefinschicht eine äußere Monoschicht oder ein Koextrudat von zwei oder mehreren Unterschichten ist, worin die Monoschicht oder die äußerste Außenunterschicht eine Bindungsschicht ist, umfassend ein funktionalisiertes Polyolefin ausgewählt aus der Gruppe bestehend aus Olefin/Vinylacetat-Copolymeren, Olefin/Alkylacrylat-Copolymeren, Olefin/neutralisierte und Olefin/teilweise neutralisierte Carbonsäure-Copolymeren, Carbonsäure oder Anhydrid gepfropften Polyolefinen, Carbonsäure oder Anhydrid gepfropftes Olefin/Vinylacetat-Copolymeren und Carbonsäure oder Anhydrid gepfropftes Olefin/Alkylacrylat-Copolymeren, und gegebenenfalls nicht modifiziertes Polyolefin und übliche Additive, zur Herstellung eines gesiegelten Gegenstands, worin die Polyolefinschicht an der Außenseite des bahnförmigen Materials an die Polyamidschicht an der Außenseite des bahnförmigen Materials und/oder umgekehrt gesiegelt ist.

2. Verwendung eines bahnförmigen Materials gemäß Anspruch 1, worin nicht modifiziertes Polyolefin in der Bindungsschicht vorhanden ist und es ein Copolymer aus Ethylen und einem Olefin von 4 bis 10 Kohlenstoffatomen ist.

3. Verwendung eines bahnförmigen Materials gemäß einem der Ansprüche 1 oder 2, worin die Polyolefinschicht ein Koextrudat von zwei oder mehreren Unterschichten ist, und eine oder mehrere der inneren Unterschichten eine Mischung aus 50 bis 90 Gew.% eines Copolymers aus HDPE und einem Olefin von 4 bis 10 Kohlenstoffatomen und 10 bis 50 Gew.% LDPE ist.

4. Verwendung eines bahnförmigen Materials gemäß einem der vorangehenden Ansprüche, worin die Polyamidschicht des bahnförmigen Materials an die Polyolefinschicht des bahnförmigen Materials und/oder umgekehrt auf eine abziehbare Weise gesiegelt ist.

5. Verwendung eines bahnförmigen Materials gemäß einem der vorangehenden Ansprüche, worin die Polyolefinschicht des bahnförmigen Materials an die Polyolefinschicht des bahnförmigen Materials auf eine Schmelzsiegelweise gesiegelt ist.

6. Verwendung eines bahnförmigen Materials gemäß Ansprüchen 1 bis 4, worin die Polyolefinschicht des bahnförmigen Materials an die Polyolefinschicht des bahnförmigen Materials auf eine abziehbare Weise gesiegelt ist.

7. Verwendung gemäß einem der vorangehenden Ansprüche, worin das bahnförmige Material ferner eine oder mehrere laminierte Schichten und/oder koextrudierte Unterschichten an einer Grenzfläche zwischen der Polyamidschicht und der Polyolefinschicht, zwischen zwei Unterschichten der Polyolefinschicht und/oder zwei Unterschichten in einem PA-Koextrudat umfaßt.

8. Verwendung eines bahnförmigen Materials gemäß einem der vorangehenden Ansprüche, worin die Bindungsschicht eine modifizierte Oberfläche aufweist, die durch Behandeln der Oberfläche der Bindungsschicht mit einer Koronaentladung verliehen wurde.

9. Verpackung umfassend ein bahnförmiges Material mit einer Polyamidaußenseite und einer gegenüberliegenden Polyolefinaußenseite, umfassend ein Laminat einer Polyamidschicht, die an eine Polyolefinschicht anhaftet, wobei die Polyolefinschicht eine äußere Monoschicht oder ein Koextrudat von zwei oder mehreren Unterschichten ist, worin die Monoschicht oder die äußerste Außenunterschicht eine Bindungsschicht ist, umfassend ein funktionalisiertes Polyolefin ausgewählt aus der Gruppe bestehend aus Olefin/Vinylacetat-Copolymeren, Olefin/Alkylacrylat-Copolymeren, Olefin/neutralisierte und Olefin/teilweise neutralisierte Carbonsäure-Copolymeren, Carbonsäure oder Anhydrid gepfropften Polyolefinen, Carbonsäure oder Anhydrid gepfropftes Olefin/Vinylacetat-Copolymeren und Carbonsäure oder Anhydrid gepfropftes Olefin/Alkylacrylat-Copolymeren, und gegebenenfalls nicht modifiziertes Polyolefin und übliche Additive, worin die Polyolefinschicht an der Außenseite des bahnförmigen Materials an die Polyamidschicht an der Außenseite des bahnförmigen Materials und/oder umgekehrt gesiegelt ist.

10. Verpackung gemäß Anspruch 9, worin die Verpackung eine Tasche ist.

11. Tasche gemäß Anspruch 10, umfassend eine gefaltete Bahn des Materials mit einer inneren Fläche (9', 9") und einer äußeren Fläche (8) und umfassend einen Beutelteil (1) mit einer Stirnseite (2) und einer Hinterseite (3) und einer Klappe (4), die sich von der Hinterseite (3) erstreckt und über eine Faltlinie (23 oder 23') auf die Vorderseite heruntergefaltet ist, wobei die innere Fläche (9') der Stirnseite (2) an die innere Fläche (9") der Hinterseite (3) an Teilen der Seitenecken (11, 12) der Tasche mittels Seiteneckensiegeln (13, 14) gesiegelt ist, und die innere Fläche (9) der Klappe (4) an die äußere Fläche (8) der Stirnseite (2) mittels einer longitudinalen Schweißnaht (10) und mittels Siegelnähten (15, 16) an Teile der Seitenecken (11, 12) gesiegelt ist, um eine verschlossene Tasche, die ein verpacktes Produkt einschließt, zu erhalten, wobei das gefaltete bahnförmige Material abziehbare Siegel (10, 15, 16) bereitstellt, wenn die innere Fläche (9) an die äußere Fläche (8) geschweißt ist, und Siegel (13, 14) zwischen den Teilen der Seiteneckenteile (11, 12) der Stirnseite (2) und der Hinterseite (3) Innenseite (9') an Außenseite (9") geschweißt sind und, falls zutreffend, gegebenenfalls Siegel (13, 14) zwischen den Teilen der Seiteneckenteile (11, 12) der Klappe (4) und der Hinterseite (3) innere Fläche (9) an innere Fläche (9") geschweißt sind, worin, wenn relativ zur Tasche gesehen, die innere Schicht der Tasche die Bindungsschicht umfaßt und die äußere Schicht der Tasche die Polyamidschicht umfaßt.

12. Tasche gemäß Anspruch 11, worin die Faltlinie (23) im wesentlichen an die obere freie Ecke (5) der Stirnseite (2) angrenzt.

13. Tasche gemäß Anspruch 12, worin die Siegel (13, 14), die zwischen den Teilen der Seitenecken (11, 12) der Stirnseite (2) und der Rückseite (3) innere Fläche (9') an äußere Fläche (9") geschweißt sind, nicht abziehbare geschweißte Siegel sind.

14. Tasche gemäß Anspruch 12, worin die Siegel (13, 14), die zwischen den Teilen der Seitenecken (11, 12) der Stirnseite (2) und der Rückseite (3) innere Fläche (9') an innere Fläche (9") geschweißt sind, abziehbare Siegel sind.

15. Tasche gemäß Anspruch 11, worin die Faltlinie (23') von der oberen freien Ecke (5) der Stirnseite (2) deutlich getrennt ist.

16. Tasche gemäß Anspruch 15, worin die Faltlinie (23') von der oberen freien Ecke (5) der Stirnseite (2) durch einen Abstand von 2 bis 50 %, vorzugsweise 5 bis 40 %, am bevorzugtesten 10 bis 30 %, von der Abmessung der Seitenecken (11, 12) der verschlossenen Tasche abgetrennt ist.

17. Tasche gemäß Anspruch 15 oder 16, worin die Siegel (13, 14) an den Seitenecken (11, 12) der Stirnseite (2) und der Rückseite (3), wobei die Siegel durch Schmelzen der inneren Fläche (9') an die innere Fläche (9") bereitgestellt werden, und worin die Siegel (13, 14) an die Seitenecken (11, 12) der Klappe (4) und der Rückseite (3), wobei die Siegel durch Schweißen der inneren Fläche (9) an die innere Fläche (9") bereitgestellt werden, abziehbare Siegel sind.

18. Tasche gemäß Ansprüchen 11 bis 17, worin die Tasche mit Verschlußmitteln zum wiederholten Öffnen und Schließen der Tasche versehen ist.

19. Tasche gemäß Anspruch 18, worin die Verschlußmittel ein Heißklebe- oder ein Klebeband umfassen.

20. Tasche gemäß Anspruch 19, worin die Verschlußmittel ein Klebeband versehen mit einem Freigabeträgermaterial umfassen.

21. Verwendung gemäß Ansprüchen 1 bis 8 des bahnförmigen Materials zur Herstellung einer Verpackung.

22. Verwendung eines funktionalisierten Polyolefins, ausgewählt aus der Gruppe bestehend aus Olefin/Vinylacetat-Copolymeren, Olefin/Alkylacrylat-Copolymeren, Olefin/neutralisierte und Olefin/teilweise neutralisierte Carbonsäure-Copolymeren, Carbonsäure oder Anhydrid gepfropften Polyolefinen, Carbonsäure oder Anhydrid gepfropftes Olefin/Vinylacetat-Copolymeren und Carbonsäure oder Anhydrid gepfropftes Olefin/Alkylacrylat-Copolymeren, gegebenenfalls in Mischung mit nicht modifiziertem Polyolefin und üblichen Additiven, als äußerste Schicht oder Unterschicht an der Polyolefinseite eines bahnförmigen Materials mit einer PA-Außenseite und einer gegenüberliegenden Polyolefinaußenseite, wobei bei der Verwendung die Polyolefinschicht an der Außenseite des bahnförmigen Materials an die Polyamidschicht der Außenseite des bahnförmigen Material und/oder umgekehrt gesiegelt wird.

## Revendications

1. Utilisation d'un matériau en feuille présentant un côté externe en polyamide et un côté externe opposé en polyoléfine, comprenant un stratifié d'une couche de polyamide qui adhère à une couche de polyoléfine, où ladite couche de polyoléfine est une mono-couche externe ou un co-extrudat de deux sous-couches ou plus, où la mono-couche ou la sous-couche la plus externe est une couche de liaison comprenant une polyoléfine fonctionnalisée sélectionnée dans le groupe composé de copolymères d'oléfine / acétate de vinyle, de copolymères d'oléfine /acrylate d'alkyle, de copolymères d'oléfine / acide carboxylique neutralisé et d'oléfine / acide carboxylique partiellement neutralisé, de polyoléfines greffées d'acide carboxylique ou d'anhydride, de copolymères d'oléfine greffée d'acide carboxylique ou d'anhydride / acétate de vinyle, et de copolymères d'oléfine greffée d'acide carboxylique ou d'anhydride /acrylate d'alkyle, et éventuellement de polyoléfine non modifiée et d'additifs conventionnels, pour la préparation d'un article scellé dans lequel la couche de polyoléfine au niveau du côté externe dudit matériau en feuille est scellée à la couche de polyamide au niveau du côté externe dudit matériau en feuille et/ou vice-versa.

2. Utilisation d'un matériau en feuille telle que revendiquée dans la revendication 1, dans laquelle de la polyoléfine non modifiée est présente dans la couche de liaison, et est un copolymère d'éthylène et d'une oléfine comportant 4 à 10 atomes de carbone.

3. Utilisation d'un matériau en feuille telle que revendiquée dans les revendications 1 ou 2, dans laquelle la couche de polyoléfine est un co-extrudat de deux sous-couches ou plus, et une ou plusieurs des sous-couches internes est un mélange de 50-90 % en poids d'un copolymère de HDPE (polyéthylène haute densité) et d'une oléfine comportant 4 à 10 atomes de carbone, et de 10-50 % en poids de LDPE (polyéthylène faible densité).

4. Utilisation d'un matériau en feuille telle que revendiquée dans l'une quelconque des revendications précédentes, dans laquelle la couche de polyamide dudit matériau en feuille est scellée à la couche de polyoléfine dudit matériau en feuille et/ou vice-versa d'une façon pelable.

5. Utilisation d'un matériau en feuille telle que revendiquée dans l'une quelconque des revendications précédentes, dans laquelle la couche de polyoléfine dudit matériau en feuille est scellée à la couche de polyoléfine dudit matériau en feuille d'une façon thermoscellée.

6. Utilisation d'un matériau en feuille telle que revendiquée dans les revendications 1 à 4, dans laquelle la couche de polyoléfine dudit matériau en feuille est scellée à la couche de polyoléfine dudit matériau en feuille d'une façon pelable.

7. Utilisation telle que revendiquée dans l'une quelconque des revendications précédentes, dans laquelle le matériau en feuille comprend en outre une ou plusieurs autres couches stratifiées et/ou sous-couches co-extrudées au niveau de toute interface entre la couche de polyamide et la couche de polyoléfine, entre deux sous-couches de la couche de polyoléfine et/ou deux sous-couches d'un co-extrudat de PA.

8. Utilisation d'un matériau en feuille telle que revendiquée dans l'une quelconque des revendications précédentes, dans laquelle la couche de liaison a une surface modifiée, qui a été conférée en traitant la surface de la couche de liaison avec une décharge corona.

9. Emballage comprenant un matériau en feuille ayant un côté externe en polyamide et un côté externe opposé en polyoléfine, comprenant un stratifié d'une couche de polyamide qui adhère à une couche de polyoléfine, où ladite couche de polyoléfine est une mono-couche externe ou un co-extrudat de deux sous-couches ou plus, où la mono-couche ou la sous-couche la plus externe est une couche de liaison comprenant une polyoléfine fonctionnalisée sélectionnée dans le groupe composé de copolymères d'oléfine/ acétate de vinyle, de copolymères d'oléfine/acrylate d'alkyle, de copolymères d'oléfine / acide carboxylique neutralisé et d'oléfine/ acide carboxylique partiellement neutralisé, de polyoléfines greffées d'acide carboxylique ou d'anhydride, de copolymères d'oléfine greffée d'acide carboxylique ou d'anhydride / d'acétate de vinyle, et de copolymères greffés d'acide carboxylique ou d'anhydride / d'acrylate d'alkyle, et éventuellement de polyoléfine non modifiée et d'additifs conventionnels, où la couche de polyoléfine au niveau du côté externe dudit matériau en feuille est scellée à la couche de polyamide au niveau du côté externe dudit matériau en feuille et/ou vice-versa.

10. Emballage tel que revendiqué dans la revendication 9, dans lequel ledit emballage est un sac.

11. Sac tel que revendiqué dans la revendication 10, comprenant une feuille pliée du matériau présentant une face interne (9', 9") et une face externe (8) et comprenant une portion de sac (1) qui possède une paroi avant (2) et une paroi arrière (3) et un rabat (4) qui s'étend depuis la paroi arrière (3) et replié sur la paroi avant autour d'une ligne de pliage (23 ou 23'), la face interne (9') de la paroi avant (2) étant scellée à la face interne (9") de la paroi arrière (3) au niveau de portions de bords latéraux (11, 12) du sac au moyen de sceaux de bords latéraux (13, 14) et la face interne (9) du rabat (4) étant scellée à la face externe (8) de la paroi avant (2) au moyen d'une ligne de soudage longitudinale (10) et au moyen de lignes de scellement (15, 16) au niveau de portions de bords latéraux (11, 12) pour obtenir un sac fermé enfermant un produit emballé, ledit matériau en feuille pliée fournissant des sceaux pelables (10, 15, 16) lorsque la face interne (9) est soudée à la face externe (8), et les sceaux (13, 14) entre les parties des portions de bords latéraux (11, 12) de la paroi avant (2) et de la paroi arrière (3) étant soudés face interne (9') contre face interne (9'') et - si applicable - en option, les sceaux (13, 14) entre les parties des portions de bords latéraux (11, 12) du rabat (4) et la paroi arrière (3) étant soudés face interne (9) contre face interne (9"), où - vu par rapport au sac - la couche interne du sac comprend la couche de liaison, et la couche externe du sac comprend la couche de polyamide.

12. Sac tel que revendiqué dans la revendication 11, dans lequel la ligne de pliage (23) bute essentiellement contre le port libre supérieur (5) de la paroi avant (2).

13. Sac tel que revendiqué dans la revendication 12, dans lequel les sceaux (13, 14) entre les portions des bords latéraux (11, 12) de la paroi avant (2) et de la paroi arrière (3), soudés face interne (9') contre face interne (9"), sont des sceaux par fusion non pelables.

14. Sac tel que revendiqué dans la revendication 12, dans lequel les sceaux (13, 14) entre les portions des bords latéraux (11, 12) de la paroi avant (2) et de la paroi arrière (3), soudés face interne (9') contre face interne (9"), sont des sceaux pelables.

15. Sac tel que revendiqué dans la revendication 11, dans lequel la ligne de pliage (23') est clairement séparée du bord libre supérieur (5) de la paroi avant (2).

16. Sac tel que revendiqué dans la revendication 15, dans lequel la ligne de pliage (23') est séparée du bord libre supérieur (5) de la paroi avant (2) d'une distance correspondant à 2-50 %, de préférence 5-40 %, de façon la plus préférée 10-30 % de la dimension des bords latéraux (11, 12) du sac fermé.

17. Sac tel que revendiqué dans la revendication 15 ou 16, dans lequel les sceaux (13, 14) au niveau des bords latéraux (11, 12) de la paroi avant (2) et de la paroi arrière (3) - lesdits sceaux étant prévus par soudage de la face interne (9') à la face interne (9") - comme les sceaux (13, 14) au niveau des bords latéraux (11, 12) du rabat (4) et de la paroi arrière (3) - lesdits sceaux étant prévus par soudage de la face interne (9) à la face interne (9") - sont des sceaux pelables.

18. Sac tel que revendiqué dans les revendications 11-17, dans lequel le sac est muni de moyens de fermeture pour permettre une ouverture et une fermeture répétées du sac.

19. Sac tel que revendiqué dans la revendication 18, dans lequel lesdits moyens de fermeture comprennent une colle thermofusible ou une bande adhésive.

20. Sac tel que revendiqué dans la revendication 19, dans lequel lesdits moyens de fermeture comprennent une bande adhésive munie d'une doublure de séparation.

21. Utilisation telle que revendiquée dans les revendications 1 à 8 du matériau en feuille pour fabriquer un emballage.

22. Utilisation d'une polyoléfine fonctionnalisée sélectionnée dans le groupe composé de copolymères d'oléfine / acétate de vinyle, de copolymères d'oléfine / acrylate d'alkyle, de copolymères d'oléfine / acide carboxylique neutralisé et d'oléfine / acide carboxylique partiellement neutralisé, de polyoléfines greffées d'acide carboxylique ou d'anhydride, de copolymères d'oléfine greffée d'acide carboxylique ou d'anhydride /acétate de vinyle, et de copolymères d'oléfine greffée d'acide carboxylique ou d'anhydride / acrylate d'alkyle, éventuellement en mélange avec une polyoléfine non modifiée et des additifs conventionnels, en tant que couche la plus externe ou sous-couche sur le côté polyoléfine d'un matériau en feuille ayant un côté externe en PA et un côté externe opposé en polyoléfine, utilisation par laquelle la couche de polyoléfine au niveau du côté externe dudit matériau en feuille est scellée à la couche de polyamide au niveau du côté externe dudit matériau en feuille et/ou vice-versa.
